# EUROPEAN PATENT APPLICATION

(11) **EP 3 343 929 A1**
(43) Date of publication of application: **04.07.2018**
(21) Application number: 17207472.6
(22) Date of filing: 14.12.2017
(51) Int. Cl.: H04N 21/4147, G06F 3/06, G11B 27/10, H04N 5/76, H04N 21/432, H04N 21/433, H04N 21/4335, H04N 21/6587

(54) **METHOD FOR STORING AUDIO/VIDEO DATA AND CORRESPONDING DEVICE**

(30) Priority: 29.12.2016 EP 16306841
(71) Applicant: THOMSON LICENSING, 92130 Issy les Moulineaux (FR)
(72) Inventor: FORTIN, Thomas, 35576 Cesson-Sévigné Cedex (FR); MORILLON, Gilles, 35576 Cesson-Sévigné Cedex (FR); SEINGIER, François-Xavier, 35576 Cesson-Sévigné Cedex (FR)
(74) Representative: Huchet, Anne

(57) **Abstract**

Efficient audio/video data storing is proposed. An audio/video stream is recorded in a shared storage zone on behalf of a plurality of client processes or client devices. Recording in the storage zone is managed through a reservation based method. Client processes and client devices may read access a recording stored on their behalf until the client process or client device releases its reservation. When a client process or client device releases its reservation, at least some of reserved storage space in the storage zone may be freed for reuse by other client processes or client devices, if the reserved storage space is not part of a reservation by another client process or client device.

## Description

### FIELD

The present disclosure generally relates to the field of audio/video receiver devices and in particular to storing audio/video data.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Manufacturers of electronic devices make a continuous effort to improve the user-friendliness of audio/video receiver devices in order to satisfy customer requirements. The development of new generation receiver devices with new features giving access to additional services is essential as it enables the customer, e.g. the service provider, to stand out from competitors and to attract new subscribers. Much appreciated features include High Definition (HD) video, timeshift and personal video recording, streaming and support for improved video formats such as Ultra-HD (4K, 8K) and High Dynamic Range (HDR). Storing many hours of HD, UHD and/or HDR quality video requires important storage resources. For example, a recording of a two-hour movie at 4K UHD quality, broadcasted at 6Mbit/s requires 21Gbit of storage space. The video storage requirement therefore contributes significantly to the overall cost of a receiver device. Efficient storing of high quality video therefore remains a challenging topic.

There is thus a continuing need for efficient storing of audio/video data.

### SUMMARY

According to one aspect of the present disclosure, a method for storing audio/video data is provided. The method is implemented by a device, and the method comprises: receiving a request for storing audio/video data of an audio/video stream in a storage zone; reserving a part of the storage zone for storing the audio/video data by storing a reservation start address pointing to the storage zone for storing the audio/video data in the storage zone from the reservation start address and storing of a reservation timestamp; if the audio/video data from the audio/video stream is not already being stored on behalf of a previous received request, storing the audio/video data in the storage zone, beginning at the reservation start address, otherwise continuing storing the audio/video data in the storage zone on behalf of the previous received request; receiving information representative of termination of the request; determining, based on the stored reservation timestamp, if the request is a first request of all requests received for storing the audio/video data, freeing storage space in the storage zone from the reservation start address up to a reservation start address of a next following request received; and removing the reservation by removing the stored reservation start address

According to an embodiment of the method for storing audio/video data, if the audio/video data of the audio/video stream is already being stored on behalf of a previous received request, the reservation start address is set to a reservation start address of the previous received request.

According to an embodiment of the method for storing audio/video data, the first request of all requests received for storing the audio/video data of the audio/video stream is a request having a lowest reservation start address of all stored reservation start addresses.

According to an embodiment of the method for storing audio/video data, the first request of all requests received for storing the audio/video data of the audio/video stream is a request having a lowest reservation start timestamp of all stored reservation start timestamps.

According to an embodiment of the method for storing audio/video data, the request for storing audio/video data of an audio/video stream in a storage zone is received from a client process.

According to an embodiment of the method for storing audio/video data, the client process is one of a timeshift client process or a recording client process.

According to an embodiment of the method for storing audio/video data, the request for storing audio/video data of an audio/video stream in a storage zone is received from a client device.

According to an embodiment of the method for storing audio/video data, the client device is one of a set top box, a digital television, or a mobile device.

According to one aspect of the present disclosure, a device for storing audio/video data is provided. The device includes a processor and a storage zone. The processor and the storage zone are configured: to receive a request for storing audio/video data of an audio/video stream in a storage zone; to reserve a part of the storage zone for storing a reservation start address pointing to the storage zone, for storing the audio/video data in the storage zone from the reservation start address and for storing a reservation timestamp; to store the audio/video data in the storage zone, beginning at the reservation start address, if the audio/video data from the audio/video stream is not already being stored on behalf of a previous received request, otherwise to continue storing the audio/video data in the storage zone on behalf of the previous received request; to receive information representative of termination of the request; to free storage space in the storage zone from the reservation start address up to a reservation start address of a next following request received if it is determined based on the stored reservation timestamp that the request is a first request of all requests received for storing the audio/video data; and to remove the reservation by removing the stored reservation start address.

According to an embodiment of the device for storing audio/video data, the processor and the storage zone are further configured to set the reservation start address to a reservation start address of a previous received request if the audio/video data of the audio/video stream is already being stored on behalf of the previous received request.

According to an embodiment of the device for storing audio/video data, the processor and the storage zone are further configured to verify if the request is a first request of all requests received for storing the audio/video data of the audio/video stream by checking if the request has a lowest reservation start address of all stored reservation start addresses.

According to an embodiment of the device for storing audio/video data, the processor and the storage zone are further configured to verify if the request is a first request of all requests received for storing the audio/video data of the audio/video stream by checking if the request has a lowest reservation start timestamp of all stored reservation start timestamps.

According to an embodiment of the device for storing audio/video data, the processor and the storage zone are further configured to receive the request for storing audio/video data of an audio/video stream in a storage zone from a client process.

According to an embodiment of the device for storing audio/video data, the processor and the storage zone are further configured to receive the request for storing audio/video data of an audio/video stream in a storage zone from a client device.

According to an embodiment of the device for storing audio/video data, the client device is one of a set top box, a digital television, or a mobile device.

### BRIEF DESCRIPTION OF THE DRAWINGS

More advantages of the present disclosure will appear through the description of particular, non-restricting embodiments. In order to describe the manner in which the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure.

Exemplary embodiments will be described with reference to the following drawings in which:
**Figure 1** is a prior art method for storing audio/video data.
**Figure 2** is an improved solution for storing audio/video data.
**Figure 3** illustrates an embodiment of some elements of a further improved solution for storing audio/video.
**Figure 4** illustrates an embodiment of the further improved solution for storing audio/video.
**Figure 5** is a further embodiment, wherein the present principles are applied to a PVR type storage, shared by a plurality of client devices.
**Figure 6** is a further embodiment illustrating application of the present principles in a configuration including a mix of client processes and client devices.
**Figure 7** is a device for storing audio/video data.
**Figure 8** is a flow chart of an embodiment of the method for storing data.

It should be understood that the drawings are for purposes of illustrating the concepts of the disclosure and are not necessarily the only possible configuration for illustrating the disclosure.

### DETAILED DESCRIPTION

The present description illustrates embodiments of principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

The term audio/video data, when used in relation with the described embodiments, is understood to comprise audio only, video only, video accompanied with one or more audio streams or audio tracks such as for support of multi-angle or multi-language audio, and video with or without audio, accompanied with subtitles. The expression of storing audio/video data, used in relation with the described embodiments, can also be understood as recording audio/video data.

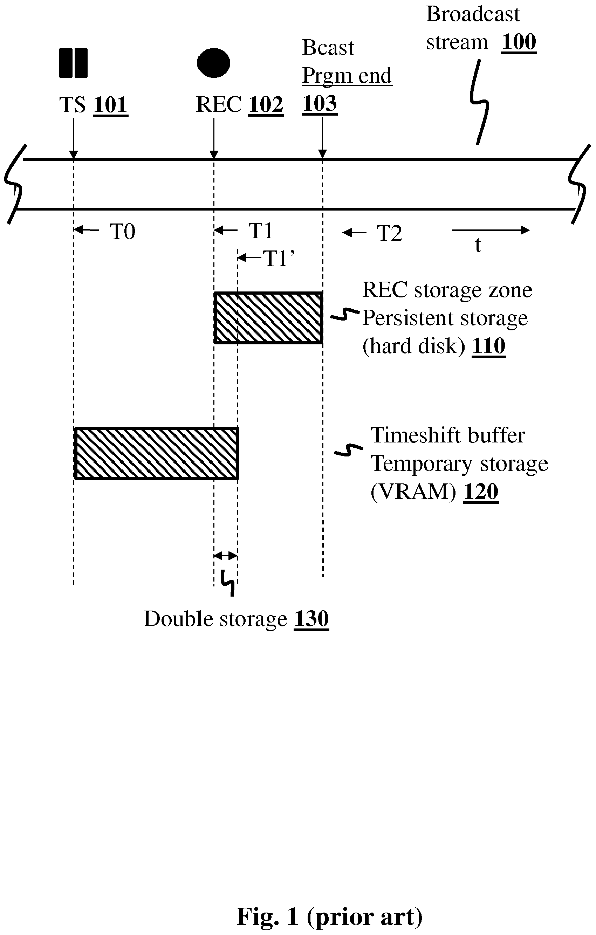

**Figure 1** is a prior art method for storing audio/video data. Fig.1 corresponds to a use case where a viewer pauses (reference **101**) a broadcasted program present in a broadcast stream **100** at T0 when the viewer is interrupted; at T1 the viewer realizes that the interruption will take longer than initially expected. Since the viewer will not be able to view the broadcast program before the timeshift buffer will reach its maximum duration or size at T1' and the viewer does not want to miss the broadcast program, the viewer decides to record (reference **102**) the broadcast program at T1 for later viewing. At T2 the end of the broadcasted program (reference **103**) in program stream **100** automatically triggers the end of the recording. The broadcasted stream comprising the broadcast program is stored in two separate storage zones for each recording process (or 'client'): a first storage zone **110** (REC storage zone, recording memory or Personal Video Recorder (PVR) storage space) is accessed on behalf of the recording process, and a second storage zone **120** (Timeshift buffer) is accessed on behalf of the timeshift process. The REC storage zone **110** is for example a file created on a hard disk, while the timeshift buffer is for example a memory zone in directly addressable memory (e.g., volatile random access memory (VRAM). The arched sections represent stored audio/video data.

This prior art method has several disadvantages. Firstly, storage resources are used inefficiently as data is copied and thus stored twice, e.g., from T1 to T1' (reference **130**) the broadcast program is stored both in REC storage zone **110** and in temporary storage **120.** Secondly, the broadcast program recording does not include the part from T0 to T1 since the recording of the broadcast program is only started at T1.

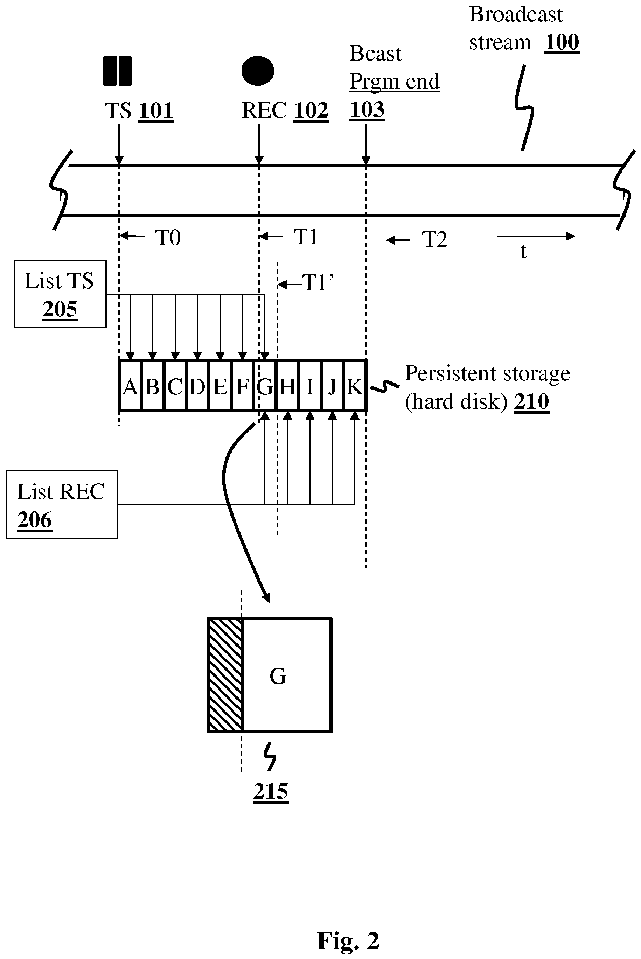

**Figure 2** is an improved solution for storing audio/video data. The broadcast stream **100** is recorded by multiple client processes in a single, shared (combined) storage zone **210** that is for example stored on a hard disk in the form of a sequence of files. At T0, when the viewer pauses the broadcast program, a timeshift is started. Consequently, a file A is created and filled with data from broadcast stream **100.** When the maximum file size of file A is reached, file A is closed. A new file B is opened, and file B is filled with data from broadcast stream **100,** etc., until file G is closed when the timeshift buffer reaches its maximum size at T1'. At T1, the viewer starts recording the broadcast stream **100.** Since the broadcast stream is already stored on request of the timeshift client process, the storage management system adds the recording client process to the client processes that request storage of the broadcast stream. For each client process, a file list (e.g., list TS **205** and list REC **206**) is created. These file lists enumerate the sequence of files that 'belong' to each client process. For example, files A to G belong to the timeshift client process and are referenced in file list **205.** Files G to K belong to the recording client process and are referenced in file list **206.** It is observed that file G is referenced in both lists.

When compared to Fig.1, storage efficiency is greatly improved as audio/video data is no longer stored twice. In addition, the broadcast stream recording as requested by the viewer can easily be configured to include the part of the broadcast program recording from T0 to T1' done on behalf of the timeshift client process. This is done by adding of files A to F to list REC **206.** Particular care must be taken when managing the lists and the combined storage space, to avoid data loss. For example, a storage management system is responsible for removing files from persistent storage **210** when storage space is no longer needed by a client process. Such a storage management system will have to parse potentially many lists (one per client process) to verify if one, several or all files of the client process' list can effectively be deleted since it is / they are not used by any other client process. Further, storage space is still not used optimally because of the segmentation of the storage in files. For example, it can be seen that file G belongs to both the timeshift client and the recording client. When the timeshift is stopped, files A to F can be removed (deleted) since they were created on behalf of the timeshift client process. Files G to K however should not be deleted since they were created on behalf of the recording client process. As the recording was started at T1, which falls somewhere in file G, some storage space is wasted in file G. This is illustrated by the arched section of the zoomed-in file G **215.** Of course, the amount of storage space wasted can be reduced with smaller files. However, storing broadcast stream segmented in many small files require many time consuming file close/open operations and the creation and storage of many file indexes. The chosen file size will thus be a compromise between reduction of storage space waste and storage management system complexity. Using the above described segmentation system, it is very difficult, if not impossible, to reduce the waste to zero under all circumstances.

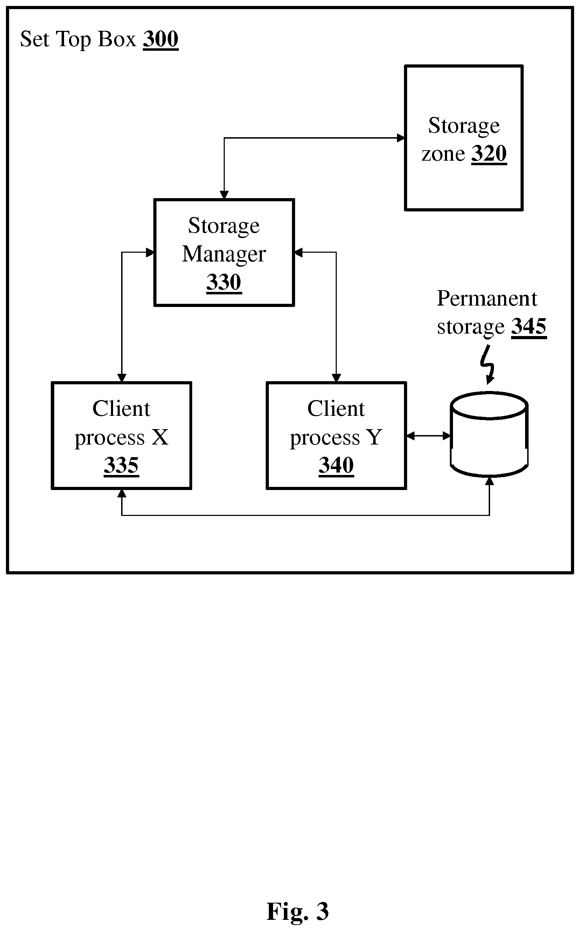

**Figure 3** illustrates an embodiment of some elements of a further improved solution for storing audio/video data. A storage manager **330** is included in a set top box **300.** The storage manager **330** is responsible for writing audio/video data to a storage zone **320.** This storage zone **320** is for example a memory, a hard disk, a removable memory stick or removable memory card. In the following, the term "client" is not to be understood as designating a user or a viewer. In the following, a "client" is understood to be a client process or a client device. A client process is for example: a timeshift client process, a recording client process or a streaming client process. In the following, a "client" is understood to be a (client-) device, for example wherein the storage zone is a PVR that is shared by a plurality of client devices such as set-top boxes, smartphones, and tablets. A plurality of clients (here, only two client processes X **335** and Y **340** are depicted for reasons of clarity; the number of clients is in principle only limited by hardware resources and ranges from one to many) make use of the storage services provided by the storage manager **330** and may read audio/video data from the storage zone **320,** for example for transmission of audio/video data to a set of audio/video decoders for audio/video rendering, for streaming of audio/video data to another client, or for transfer of audio/video data from the storage zone **320** to another storage zone, e.g., to ensure permanent storage of data stored in the storage zone **320** on a hard disk **345** or in the cloud.

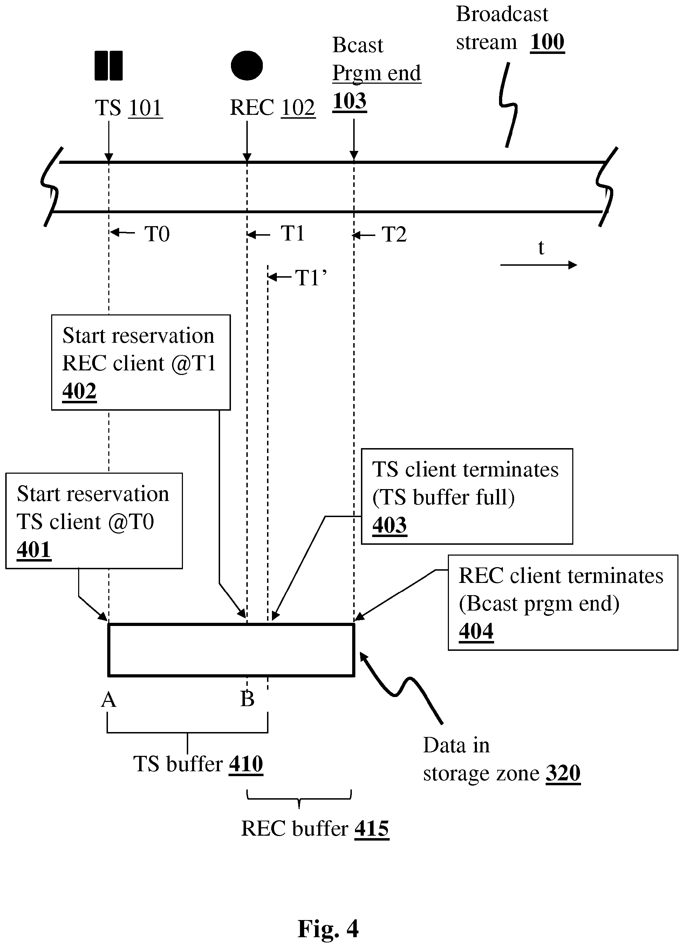

**Figure 4** illustrates an embodiment of the further improved solution for storing audio/video data and includes a reservation-based storage method. Broadcast stream **100** is stored on request in storage zone **320.** The following explanation is based on the use case that has previously been discussed with reference to Figs. 1 and 2. For the purpose of this use case, client X **335** of Fig.3 is referred to as the timeshift client process, while client Y **340** of Fig.3 is referred to as the recording client process. At T0, the broadcast program comprised in broadcast stream **100** is paused by a user. The storage manager **330** therefore receives a stream recording request on behalf of timeshift client process **335.** The storage manager places a reservation **401** of storage zone **320** for the timeshift client process **335** at T0 and at storage address A. The storage manager **330** starts recording the broadcast stream in storage zone **320** at address A on behalf of the timeshift client process **335.** For this, the storage manager stores, e.g. in memory, in a table or other data structure (linked list, data base), a pointer to address A of the storage zone **320** and stores an associated timestamp T0, and stores an associated reference (identifier) of the timeshift client process. The storage manager may keep the internal table to manage the reservations and the recordings in storage zone **320** (updates to the table are emphasized with italic print):

| Reservation start timestamp | Reservation start address | Reservation client process ID |
|---|---|---|
| *T0* | *A* | *TSprocID* |

At T1 a recording is requested on behalf of the recording client process **340.** The storage manager **330** places a reservation **402** at start address at B and an associated timestamp T1. The storage manager continues recording the broadcast stream in storage zone **320** on behalf of both the timeshift client process **335** and the recording client process **340:**

| Reservation start timestamp and | Reservation start address | Reservation client process ID |
|---|---|---|
| T0 | A | TSprocID |
| *T1* | *B* | *RECprocID* |

At T1', the timeshift buffer **410** (e.g., the timeshift "buffer" is an amount of storage space in storage zone **320** available for timeshift) reaches its maximum capacity. This ends **403** the timeshift client process **335;** for the viewer, this results in play out resuming from pause to live broadcast. The storage manager **330** verifies in the memory (e.g., in the table, linked list or other data structure) if the reservation start timestamp of the timeshift client process is the oldest (first) timestamp in the table. As it is, the storage zone **320** can be reused for recording from the address associated with the timestamp of the timeshift client process **335** to the address associated with next reservation timestamp, that is the start reservation timestamp of the recording client process **340,** with associated address B. In any case, even if the reservation start timestamp of the timeshift client process **335** would NOT be the oldest (first) timestamp in the memory (in the table, linked list or other data structure), the storage manager **330** removes the entry related to the timeshift client process **335** from the memory (from the table):

| Reservation start timestamp and | Reservation start address | Reservation client process ID |
|---|---|---|
| | | |
| *T1* | *B* | *RECprocID* |

Note that in the case when the reservation start timestamp of the timeshift client process **335** would NOT be the oldest (first) timestamp in the memory (in the table, linked list or other data structure), the storage space from address A to B cannot be reused since it contains data stored for another client process that made a reservation before the timeshift client process **335.**

The timeshift client process **335** now being terminated, the recording of the broadcast stream **100** in storage zone **320** continues on behalf of the recording client process **340.**

At T2, the recording of the broadcast program on behalf of the recording client process **340** ends automatically **404,** triggered by the end of the broadcast program. The storage manager **330** removes the entry in the memory (in the table, linked list or other data structure) that is related to the recording client process **340:**

| Reservation start timestamp and | Reservation start address | Reservation client process ID |
|---|---|---|
| | | |
| | | |

As there are no more client processes for which a recording of the broadcast stream needs to be continued, the recording of the broadcast stream in storage zone **320** ends herewith.

As discussed with reference to Fig.3 a client process cannot write to the storage zone **320** but a client process can read data from storage zone **320.** The client process uses relative addresses e.g., starting from 0 or 1, while the storage manager **330** uses real (absolute) addresses (e.g., the previously mentioned addresses A or B). The storage manager **330** translates relative addresses to real addresses and vice versa. A client process may for example read data stored in storage zone **320** from its reservation start address to the last recorded data, it may request to read a block of data from the storage manager **330** for play out after resuming from pause, from address 0 to address 1000 or from 4092 to 5218 if address 1000, respectively 4092 and 5218 are not beyond the address of last recorded data. To fetch the requested data the storage manager **330** translates these relative addresses to the real addresses, e.g., through adding the start address A to the address requested by the client process. The storage manager **330** may also do translation from time to real address. A client process executing a rewind trick mode may for example request a block of data that was recorded 30 minutes ago, if the requested rewind time is not before the reservation start timestamp and if the block end does not fall beyond the last recorded data.

In the above example, it is mentioned that the timeshift client process **335** ends when the timeshift buffer is full. According to an embodiment, the timeshift client process **335** makes a new reservation when the timeshift buffer reaches its maximum size. While this has the effect of shifting the starting point of the timeshift it avoids an increase of the size of the timeshift buffer which may not be desirable. For a viewer this can be preferable to a resume to live broadcast when the maximum size of the timeshift buffer is reached.

Recordings done on behalf of the recording client process **340** may have a permanent character. The recording client process **340** then reads data recorded on its behalf from the storage zone **320** and copies the data to a hard disk or cloud storage before it terminates.

According to a further embodiment, the recording of the broadcast stream **100** done on behalf of the recording client process **340** is set to include the part of the broadcast stream recording that was started at T0 on behalf of the timeshift client process **335,** if a timeshift recording of the broadcast stream **100** was started before the recording requested on behalf of the recording client process **340.** For example, returning to the present use case, if a recording of the broadcast stream **100** was started at T0 on behalf of the timeshift client process **335** and a recording of the same broadcast stream **100** is requested at T1 by the recording client process **340,** the storage manager **330** will place/move, in the memory (in the table, linked list or other data structure) the reservation for the recording client process **340** at the reservation start address of the timeshift client process **335:**

| Reservation start timestamp and | Reservation start address | Reservation client process ID |
|---|---|---|
| T0 | A | TSprocID |
| *T0* | *A* | *RECprocID* |

This is advantageous for a viewer since the recording of the broadcast stream **100** now includes the part of the broadcast program that was received after the broadcast program was paused. This "appending" of the part of the broadcast stream recorded on behalf of the timeshift client process **335** to the recording on behalf of the recording client process **340** is thus done by a simple placing or movement of a pointer in memory (in a table such as illustrated above, linked list or other data structure) and without copying or moving data. Otherwise, if no timeshift recording of the same broadcast stream **100** was started before the recording requested on behalf of the recording client process **340,** the reservation start address is not moved (changed).

According to a different use case, a timeshift on a broadcast stream is started after a recording was started of the same broadcast stream (e.g., the viewer presses the ● (REC) button on the remote control of a device implementing an embodiment of the present principles, followed by a press on the ■■ (pause) button. In a similar manner as the first discussed use case, the present principles apply, and according to an embodiment, the reservation start address of the later timeshift client process can be placed/moved/set to the reservation start address of the earlier started recording client process, so that the earlier started recording done for the recording client process is appended to the later started timeshift. This is advantageous for the viewer, who can now use a reverse trick mode (e.g., by pressing on the 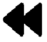 (frev) button) to review all or part of the broadcast stream that was already stored in the storage zone **320** on behalf of the recording client process.

In the above discussed embodiment reservation start timestamps are used. Reservation start timestamps may be used when the storage zone **320** is implemented as a circular storage zone in which subsequent addresses do not necessarily evolve in an increasing way. In this case the test that is done when a client process terminates, to verify if at least part of the storage zone **320** reserved by the terminated client process can be freed for reuse, is based on a comparing of reservation start timestamps stored in memory (in a table as illustrated above, linked list or other data structure); it is then sufficient to verify if the reservation start timestamp of the terminated client process is the first reservation start timestamp. If it is, the storage zone **320** can be freed for reuse from the reservation start address corresponding to the first reservation timestamp to the reservation start address corresponding to the next following reservation start timestamp, as it means that the part of storage zone **320** that can be freed is not part of a reservation by another client process. If it is not, that is, the reservation start timestamp of the terminated client process is not the first reservation start timestamp, the storage zone **320** can NOT be freed for reuse from the reservation start address of the terminated client process to the reservation start address corresponding to the next following reservation start timestamp, as it means that the part of storage zone **320** that cannot be freed is part of a reservation by another, earlier started client process.

According to a further embodiment, the storage zone is a linear storage zone in which subsequent addresses evolve in an increasing way. In this embodiment there is no need to store timestamps. The above described test that is done when a client process terminates, to verify if at least part of the storage zone **320** reserved by the terminated client process can be freed for reuse, is then based on a comparing of reservation start addresses stored in memory (in a table such as illustrated above, linked list or other data structure). Instead of verifying if a reservation start timestamp of a terminated client process is the oldest (first) timestamp in the memory, it is sufficient to verify if the reservation start address of a terminated client process is the lowest (first) reservation start address in the memory. If it is, the storage zone **320** can be freed for reuse from the lowest (first) reservation start address to the next following reservation start address as it means that the part of storage zone **320** that can be freed is not part of a reservation by another client process. If it is not, that is, the reservation start address of the terminated client process is not the lowest (first) reservation start address, the storage zone **320** can NOT be freed for reuse from the reservation start address of the terminated client process to the next following reservation start address, as it means that the part of storage zone **320** that cannot be freed is part of a reservation by another, earlier started client process.

According to a further embodiment, instead of using a table, a linked list is used for storing reservation timestamp and/or reservation start addresses. The use of a linked list may be advantageous when verifying if a reservation start address or reservation start timestamp of a terminated client process is the oldest (first) reservation for the same audio/video data; it is then sufficient to compare the reservation start address or the reservation start timestamp of the terminated client process with the reservation start address or reservation start timestamp included in the first element of the linked list. If the reservation start address or reservation start timestamp of the terminated client process is the same as that of the first element of the linked list, the reservation start address or the reservation start timestamp of the terminated client process is the oldest (first) reservation for the same audio/video data and the part of the storage zone **320** from the reservation start address or the corresponding reservation start address of the terminated client process to the reservation start address or the corresponding reservation start address of the next following element in the linked list can be freed for reuse and the first element of the linked list is deleted. If to the contrary the reservation start address or reservation start timestamp of the terminated client process is NOT the same as that of the first element of the linked list, the reservation start address or the reservation start timestamp of the terminated client process is NOT the oldest (first) reservation for the same audio/video data and the part of the storage zone **320** from the reservation start address or the corresponding reservation start address of the terminated client process to the reservation start address or the corresponding reservation start address of the next following element in the linked list cannot be freed for reuse and the first element of the linked list is NOT deleted. According to a further embodiment, instead of using a table or a linked list, a database is used for storing reservation timestamps and/or reservation start addresses. According to a further embodiment, a combination of these different means is used, e.g., a table in a database, or a linked list stored in a database.

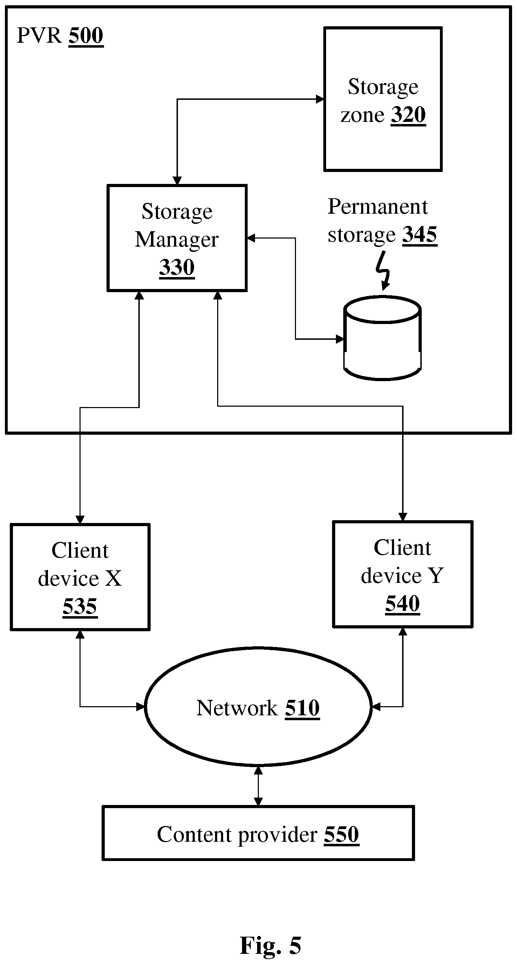

**Figure 5** is a further embodiment, wherein the present principles are applied to a PVR type storage, shared by a plurality of client devices. PVR **500** includes a storage manager **330,** a storage zone **320** managed by storage manager **330,** and a permanent storage **345,** also managed by storage manager **330.** Connected to PVR **500** are a client device X **535,** i.e. a first set top box, and a client device Y **540,** i.e. a second set top box. Client devices X and Y are connected to PVR **500** for example via a Universal Serial Bus (USB). Client devices X and Y receive broadcast audio/video data streams from a content provider **550** via a wired or wireless connection to network **510.** According to an embodiment, client devices X and Y connect to network **510** via an intermediate device or access gateway (not shown). According to an embodiment, the PVR including the storage manager **330,** storage zone **320** and permanent storage **345,** are embodied in a gateway device, which is also connected to network **510** and thereby also provides client devices X and Y with content from content provider **550.** In this gateway embodiment, the communication link between the client devices and the gateway is a wired or wireless network.

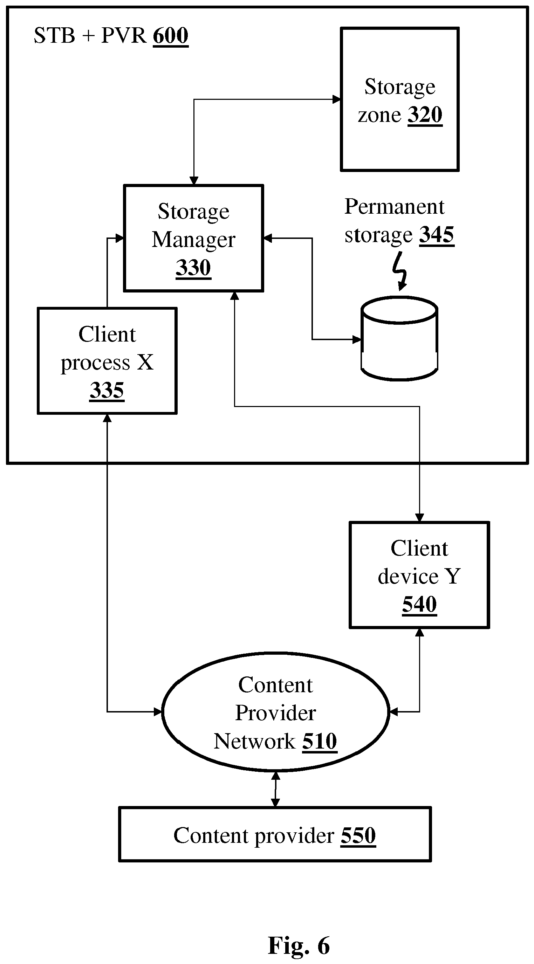

**Figure 6** is a further embodiment illustrating application of the present principles in a configuration including a mix of client processes and client devices. Device **600** is a set-top box that includes a PVR function. Both internal client process X **335** and external client device Y **540** can make use of the services offered by storage manager **330** as described previously.

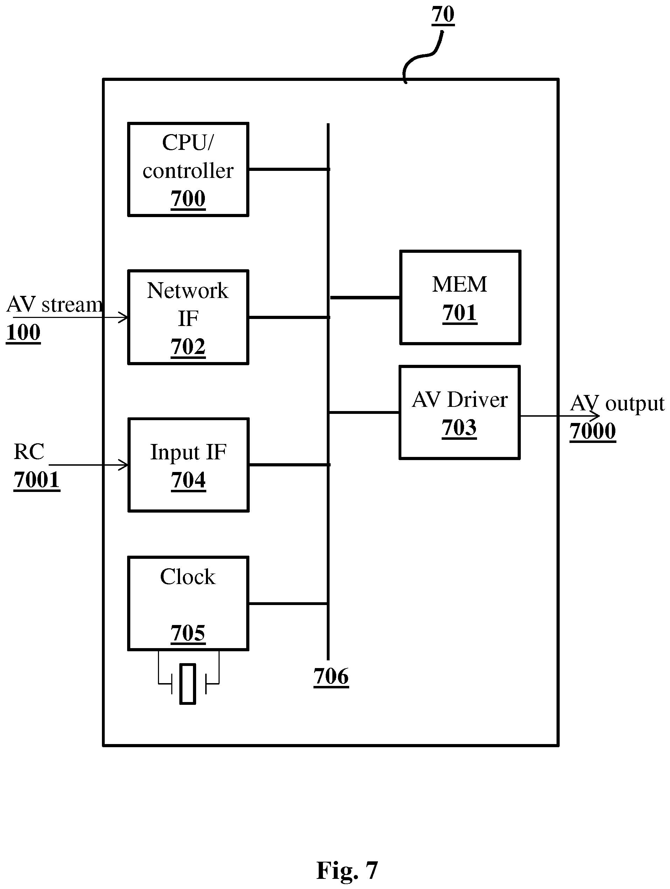

**Figure 7** is a device for storing audio/video data. The device is for example a set top box, a digital television or a mobile device, that includes features of device **600** illustrated in Fig.6.The device **70** includes a Central Processing Unit (CPU) **700,** a memory **701,** a network interface **702,** an audio/video driver **703,** an input interface **704,** and a clock unit **705.** Elements **700** to **705** are interconnected by means of an internal data bus **706.** Network interface **702** enables the device to be connected to a network, such as a content provider network for receiving an audio/video stream and such as for connection to an external or internal storage device **345.** Input interface **704** enables the device to receive instructions from a viewer, for example from a remote control **7001,** a tactile display, a keyboard or mouse. Audio/video driver **703** includes an output **7000,** for connection to an internal or external display or display device (not shown). Memory **701** comprises instructions that, when executed by CPU **700,** implement an embodiment of a method according to the present principles. The previously discussed storage zone **320** is included in memory **701.** Clock unit **705** may be used for generation of reservation start timestamps. A device implementing an embodiments according to the present principles does not necessarily require all the elements shown. For example, a device implementing embodiments according to the present principles does not include input interface **704** and/or AV driver **703.**

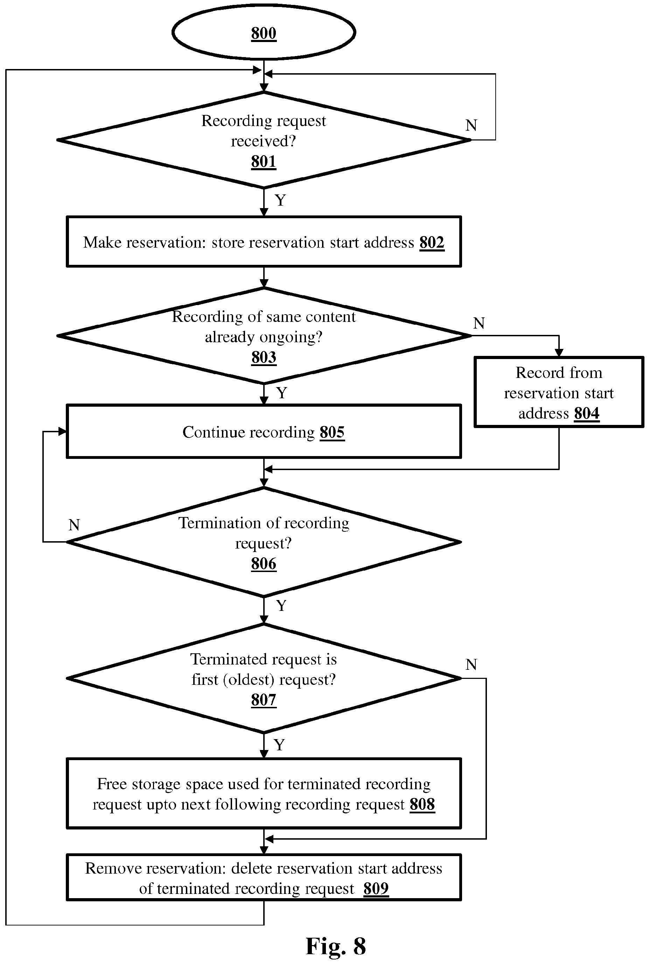

**Figure 8** is a flow chart of an embodiment of the method for storing (recoding) audio/video data. The method is for example executed by storage manager **330.** Any parameters used in the method are initialized in a preliminary step **800.** In a step **801,** a storage (recording) request for storing (recording) audio/video data in a storage zone (e.g., in storage zone **320**) is received (**801**-Yes) from a client (e.g., from one of the client processes **335** or **340,** or from one of the client devices **535** or **540**). The storage request is for example for storing a broadcast program included in a broadcast stream **100.** If such storage (recording) request is not received the method loops in step **801** (**801**-No). In a step **802** following step **801**-Yes, a reservation is done of the storage zone **320** from a reservation start address pointing to the storage zone **320** (e.g., the reservation is made by storing a reservation start address pointing to the storage zone **320** in a table, in a linked list, in a database and/or in (NV)RAM memory). As the storage manager "knows" what audio/video data is stored in the storage zone managed by it, the reservation start address is selected by the storage manager. In step **803,** it is verified if a storing (recording) of the same content as requested for storing in the request received in step **801** is already ongoing. For example, a recording of the same audio/video stream may have been requested previously on behalf of a client process or on behalf of a client device. If this is not the case (**803**-No), in a step **804** the storing (recording) starts at the reservation start address that was selected in step **802.** Otherwise, (step **803**-Yes) the already ongoing storing of the audio/video data continues. Note that, according to a particular embodiment, the reservation start address for the storage request received in step **801,** as selected by the storage manager, may have been set in step **802** to the storage zone address where the storage will continue, or, the reservation start address is set to the reservation start address of the previously requested storage, thereby appending the storage of the audio/video stream done on behalf of the previously received request for storing of the audio/video data to the storage of the audio/video stream that will be done on behalf of the request received in step **801.** In step **806,** it is verified if information representative of termination of the request for storing is received. This information is for example, a termination of a client process, or a message representative of a release of a request for storing audio/video data, received from a client device. If such information is not received (**806**-No), storing continues (step **805**). Otherwise (**806**-Yes), in step **807,** it is verified if at least some storage space in the storage zone used for storing the audio/video data related to the request for which the information is received, can be freed for reuse for storing of other audio/video data. To do so, the storage manager therefore verifies if the request for which the information is received is the oldest (first) request of all requests received for storing the same audio/video data. This verification can be done based on the stored reservation start addresses or based on the stored reservation start timestamps according to the embodiment used (e.g., depending on if a storage zone having linear increasing addressed is used, or a storage zone that is implemented as a circular buffer is used). If the request for which the information is received is the oldest (first) request for storing the same audio/video data, (step **807**-Yes), it is determined how much of the space in storage zone used for storing the audio/video data relating to the terminated request can be freed, i.e. can be rendered available for storing of audio/video data for new requests. The space that can be freed ranges from the reservation start address determined for the request in step **802** to the reservation start address of the next following request received. For example, with reference to Fig. **4****,** the timeshift at TO resulted in the request received in step **801,** another request for storing was received from the recording client process at T1, and the timeshift client process terminated in T1', the space that can be freed reaches from address A to B, wherein A is the reservation start address of the request received in step **801,** and wherein B is the reservation start address of the next following request received. Otherwise, i.e. when the request for which the information is received is not the oldest (first) request for storing the same audio/video data (step **807**-No), no space can be freed. Finally, in step **809,** the reservation start address as determined in step **802,** is removed (i.e., the corresponding reservation is removed or deleted, e.g., with reference to the description of Fig.**4**, the corresponding entry in the table or the corresponding element of the linked list is removed/deleted), and the method returns to step **801.**

It can thus be observed that the method and device according to the present principles enable a storage management for storing audio/video data that is simpler and more efficient than the prior art method of figure 1. Notably, the management of audio/video in the storage zone is simplified and storage efficiency is improved (there is no waste of storage) when comparing the reservation-based method according to the present principles with the prior art segmentation based method.

It is to be appreciated that some elements in the drawings may not be used or be necessary in all embodiments. Some operations may be executed in parallel. Different embodiments other than those illustrated and/or described are possible.

It is to be appreciated that aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method for storing audio/video data implemented by a device, the method comprising:
receiving (801) a request for storing audio/video data of an audio/video stream in a storage zone (320);
reserving a part of said storage zone for storing said audio/video data by storing (802) a reservation start address pointing to said storage zone for storing said audio/video data in said storage zone from said reservation start address and storing a reservation timestamp;
if said audio/video data from said audio/video stream is not already being stored (803) on behalf of a previous received request, storing (804) said audio/video data in said storage zone, beginning at said reservation start address, otherwise continuing storing (805) said audio/video data in said storage zone on behalf of said previous received request;
receiving (806) information representative of termination of said request;
determining, based on said stored reservation timestamp, if said request is a first request (807) of all requests received for storing said audio/video data, and if said request is a first request, freeing storage space (808) in said storage zone from said reservation start address up to a reservation start address of a next following request received; and
removing (809) said reservation by removing said stored reservation start address.

2. The method according to claim 1, wherein, if said audio/video data of said audio/video stream is already being stored on behalf of a previous received request, said reservation start address is set to a reservation start address of said previous received request.

3. The method according to claim 1 or 2, wherein said first request of all requests received for storing said audio/video data of said audio/video stream is a request having a lowest reservation start address of all stored reservation start addresses.

4. The method according to claim 1 or 2, wherein said first request of all requests received for storing said audio/video data of said audio/video stream is a request having a lowest reservation start timestamp of all stored reservation start timestamps.

5. The method according to any of claims 1 to 4, wherein said request for storing audio/video data of an audio/video stream in a storage zone is received from a client process.

6. The method according to claim 5, wherein said client process is one of a timeshift client process or a recording client process.

7. The method according to any of claims 1 to 4, wherein said request for storing audio/video data of an audio/video stream in a storage zone is received from a client device.

8. The method according to claim 7, wherein said client device is one of a set top box, a digital television, or a mobile device.

9. A device (300, 500, 600, 70) for storing audio/video data, said device comprising a processor (700) and a storage zone (701, 320), wherein said processor and said storage zone are configured:
to receive a request for storing audio/video data of an audio/video stream in a storage zone;
to reserve a part of said storage zone for storing a reservation start address pointing to said storage zone, for storing said audio/video data in said storage zone from said reservation start address and for storing a reservation timestamp;
to store said audio/video data in said storage zone, beginning at said reservation start address, if said audio/video data from said audio/video stream is not already being stored on behalf of a previous received request, otherwise to continue storing said audio/video data in said storage zone on behalf of said previous received request;
to receive information representative of termination of said request;
to free storage space in said storage zone from said reservation start address up to a reservation start address of a next following request received if it is determined based on said stored reservation timestamp that said request is a first request of all requests received for storing said audio/video data; and
to remove said reservation by removing said stored reservation start address.

10. The device according to claim 9, wherein said processor and said storage zone are further configured to set said reservation start address to a reservation start address of a previous received request if said audio/video data of said audio/video stream is already being stored on behalf of said previous received request.

11. The device according to claim 9 or 10, wherein said processor and said storage zone are further configured to verify if said request is a first request of all requests received for storing said audio/video data of said audio/video stream by checking if said request has a lowest reservation start address of all stored reservation start addresses.

12. The device according to claim 9 or 10, wherein said processor and said storage zone are further configured to verify if said request is a first request of all requests received for storing said audio/video data of said audio/video stream by checking if said request has a lowest reservation start timestamp of all stored reservation start timestamps.

13. The device according to any of claims 9 to 12, wherein said processor and said storage zone are further configured to receive said request for storing audio/video data of an audio/video stream in a storage zone from a client process.

14. The device according to any of claims 9 to 12, wherein said processor and said storage zone are further configured to receive said request for storing audio/video data of an audio/video stream in a storage zone from a client device.

15. The device according to claim 14, wherein the client device is one of a set top box, a digital television, or a mobile device.
